# EUROPÄISCHE PATENTSCHRIFT

(11) **EP 2 759 720 B1**
(45) Veröffentlichungstag und Bekanntmachung des Hinweises auf die Patenterteilung: **10.07.2019**
(21) Anmeldenummer: 14150308.6
(22) Anmeldetag: 07.01.2014
(51) Int. Cl.: F16B 31/00

(54) **Abscherschraube und Absperrpfosten mit derartiger Abscherschraube**
Shear screw and a barrier post with such a shear screw
Vis à cisaillement et poteau de barrage doté d'une telle vis à cisaillement

(30) Priorität: 25.01.2013 CH 2992013
(43) Veröffentlichungstag der Anmeldung: 30.07.2014
(73) Patentinhaber: Burri public elements AG, 8152 Glattbrugg (CH)
(72) Erfinder: Burri, Martin, 8302 Kloten (CH)
(74) Vertreter: Schneider Feldmann AG Patent- und Markenanwälte

(56) Entgegenhaltungen:
- EP-A1- 1 918 595
- EP-A1- 1 933 043
- CH-A5- 631 769
- DE-A1- 4 113 242
- DE-U1- 29 801 441
- US-B1- 6 308 927

## Beschreibung

### Technisches Gebiet

Die vorliegende Erfindung beschreibt eine Abscherschraube zur Befestigung eines Standrohres an einer Ankerplatte, umfassend einen Kopf mit einer Kopfbreite B und mit einem Mitnahmeprofil und einen Gewindeschaft mit einem Schaftdurchmesser d und mit einem Aussengewinde, wobei die Abscherschraube eine Sollbruchstelle am Kopf oder Gewindeschaft aufweist und die Kopfbreite B grösser ist als der Schaftdurchmesser d, sowie die Verwendung mindestens einer Abscherschraube zur unlösbaren Befestigung eines Standrohres an einer Ankerplatte zur Bildung eines Absperrpfostens und einen Absperrpfosten mit mindestens einer solchen Abscherschraube.

### Stand der Technik

Absperrpfosten für Fahrbahnen, Parkplätze, Geh- oder Zufahrtswege, welche in einer Bodenverankerung lösbar befestigbar sind, sind seit längerer Zeit auf dem Markt erhältlich. Aus der CH631769 geht ein derartiger Absperrpfosten hervor, welcher durch ein Schloss vor unbefugter Entfernung gesichert ist und aufgrund eines Verriegelungsmechanismus einfach ver- und entriegelbar ausgestaltet ist.

Der Absperrpfosten umfasst ein Standrohr, dessen Fussabschnitt eine Ankerplatte und einen Bajonettverschluss aufweist, mit dem das Standrohr in die Bodenverankerung als Hülse ausgeführt eingelassen und lösbar befestigt wird. Das Standrohr weist im Inneren des Fussabschnittes einen Sockel mit Ausnehmungen auf. Eine Mehrzahl von Abscherschrauben ist in die Ausnehmungen einschraubbar, mittels welchen die Ankerplatte form- und/oder kraftschlüssig mit dem Sockel unlösbar verbindbar ist. Dadurch ist das Standrohr mittelbar an der Bodenverankerung befestigt. Ein an die Ankerplatte angeformter Befestigungsrand bildet den Bajonettverschluss. Ein Zentrierdorn am Sockel gewährleistet, dass der Fussabschnitt des Standrohrs korrekt drehbar in eine Hülsenaufnahmeplatte der Bodenverankerung eingeführt wird. Befindet sich der Absperrpfosten in der Hülsenaufnahmeplatte in der Verriegelungsposition, dann schliesst ein Verriegelungsmechanismus und das Standrohr ist fest unlösbar in der Bodenverankerung gehalten. Da die Bodenverankerung in Form einer Hülse im Boden versenkt ist, ragt nur das Standrohr aus der Bodenfläche heraus.

Die verwendeten Abscherschrauben sind aus weicheren Metallen oder Legierungen hergestellt und weisen zwei Sollbruchrinnen auf. Diese Sollbruchstellen sind bei eingeschraubten Abscherschrauben derart angeordnet, dass sie die jeweils benachbart verlaufenden Flächen des Sockels und der Ankerplatte berühren.

Bei erhöhter Krafteinwirkung auf das Standrohr, beispielsweise durch den Kontakt mit einem Fahrzeug, werden die Abscherschrauben durch ein Verkippen des Standrohres mit Sockel relativ zur Ankerplatte abgeschert, wobei das Standrohr von der Ankerplatte und damit von der Bodenverankerung gelöst wird. Eine Sollbruchstelle zwischen Standrohr und Bodenverankerung ist damit erreicht, wobei die Standfestigkeit durch die Kräfte definiert ist, bei welchen die Abscherschrauben abscheren. Der Vorteil dieser Lösung ist, dass weder die Bodenverankerung, noch die Ankerplatte, noch das Standrohr oder der Verriegelungsmechanismus bei einer Kollision beschädigt werden. Das Standrohr wird sauber von der Ankerplatte getrennt, wobei zur Wiederherstellung des Ausgangszustandes lediglich die Abscherschrauben ersetzt werden müssen.

In der Praxis hat sich allerdings gezeigt, dass die Abscherschrauben bei einer Abtrennung des Standrohres von der Ankerplatte direkt fluchtend mit der Aussenfläche des Sockels abscheren oder an einer Stelle, die sich innerhalb der Ausnehmungen im Sockel versenkt befindet. Dadurch erweist sich eine Entfernung der in den Ausnehmungen befindlichen Gewindeschäfte der nach dem Abscheren kopflosen Abscherschrauben als schwierig und zeitaufwändig. Wenn der aus dem Sockel ragende Gewindeschaft nicht mit einer Zange gegriffen werden kann, hilft nur ein mühsames Aufbohren des Gewindeschaftes.

Durch Variation des Materials der Abscherschrauben kann zwar der für die Abscherung notwendige Kraftaufwand variiert werden, allerdings brechen oder scheren die Abscherschrauben trotzdem an einer Position innerhalb des Sockels ab.

Auch die Optimierung der zwei Sollbruchrinnen entlang des Umfangs der Ascherschraube und Anordnung zwischen dem Kopf und dem Gewindeschaft der Abscherschraube konnte das ungünstige Abscheren der Abscherschraube an einer schlecht zugänglichen Stelle innerhalb des Sockels nicht beseitigen.

Die EP1933043 beschreibt eine Abscherschraube aus dem Stand der Technik.

Die US 6308927 beschreibt einen Pfosten mit einem L-förmigen Profil, der demzufolge keinen Hohlraum aufweist im Gegensatz zu einem Standrohr. Dadurch ist seine Grundplatte von der Oberseite her gut zugänglich. Für die Montage wird eine Befestigungsschraube verwendet, welche eine mittige, breite Schulter und beidseits davon zwei Enden mit Gewindeabschnitten aufweist. Diese durchstossen je eine Halteplatte der Bodenverankerung resp. des Pfostens und werden mit Muttern gesichert. Nachdem die Befestigungsschraube an einer dafür angebrachten Sollbruchstelle gebrochen ist, lassen sich beide Muttern und die Gewindeteile mühelos entfernen, da sie gut zugänglich sind.

### Darstellung der Erfindung

Die vorliegende Erfindung hat sich zur Aufgabe gestellt eine Abscherschraube und die Verwendung mindestens einer derartigen Abscherschrauben zur Befestigung eines Standrohres an einer Ankerplatte zu schaffen, sodass die Sollbruchstelle optimiert ist und die Abscherschraube auch im gebrochenen Zustand garantiert aus der Ausnehmung, in welcher sie gehalten ist, ausschraubbar ist.

Eine weitere Aufgabe ist die Schaffung eines Absperrpfostens, wobei eine einfache Auswechslung der verwendeten Abscherschrauben aus den Ausnehmungen im Sockel erreicht wird.

Zur Lösung dieser Aufgabe wird eine Abscherschraube mit einer speziellen Geometrie eingeführt, die eine Sollbruchstelle aufweist, wobei bei abgetrenntem Kopf in den Körper des Gewindeschaftes der Abscherschraube mit einem Werkzeug eingegriffen werden kann und der Gewindeschaft einfach aus der jeweiligen Ausnehmung entfernbar ist.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine Ansicht, teilweise nur als Umrissdarstellung ausgeführt der hier vorgestellten Absperrpfosten, wobei eine in den Boden einbetonierte Bodenverankerung in einer teilweise geschnitten dargestellte Bodenansicht gezeigt ist.
- Figur 1b: zeigt einen Absperrpfosten im verriegelten Zustand und einen weiteren Absperrpfosten auf den eine Kraft in Pfeilrichtung wirkt.

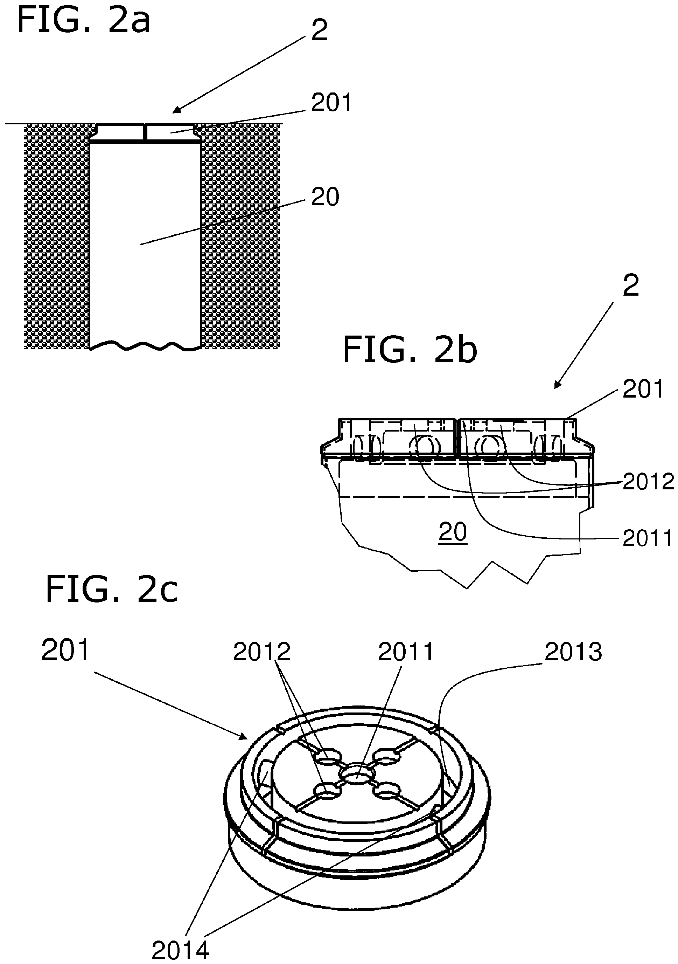

- Figur 2a: zeigt eine Ansicht einer Bodenverankerung in Form einer Hülse mit einer Hülsenaufnahmeplatte, wähernd
- Figur 2b: die Hülsenaufnahmeplatte in einer Schnittansicht und
- Figur 2c: die Hülsenaufnahmeplatte in einer perspektischen Ansicht zeigt.
- Figur 3a: zeigt eine Explosionszeichnung eines Absperrpfostens mit Standrohr und der beabstandeten Bodenverankerung in Form einer Ansicht, während
- Figur 3b: die Explosionszeichnung gemäss Figur 3a in Form einer Schnittansicht zeigt.
- Figur 3c: zeigt die Ansicht auf den Fussabschnitt des Standrohres gemäss Figur 3a in Richtung des angedeuteten Pfeils.
- Figur 4: zeigt eine Schnittansicht eines Teils des Fussabschnittes, wie durch den Kreis in Figur 3b angedeutet.
- Figur 5a: zeigt eine Ansicht eines Kopfes einer Abscherschraube in Längsrichtung der Abscherschraube blickend, während
- Figur 5b: einen Längsschnitt durch die Abscherschraube gemäss Linie A-A aus Figur 5a zeigt.

### Beschreibung

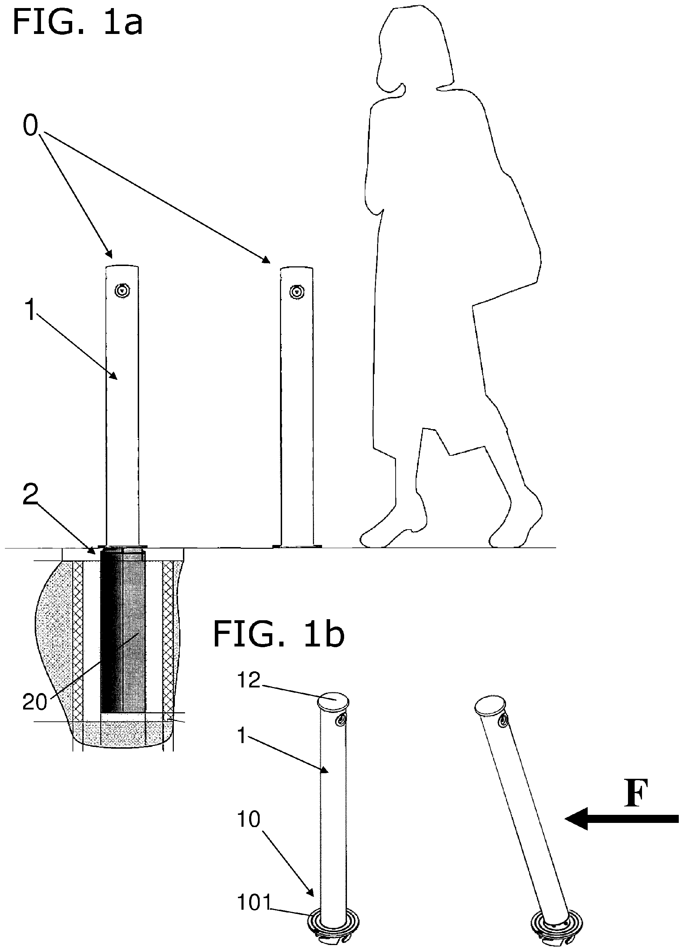

Der oberirdisch sichtbare Teil eines Absperrpfostens 0 in Form eines Standrohres 1 ist in Figur 1a als Silhouette gezeigt. Dieses Standrohr 1 bildet mit einer im Boden versenkten Bodenverankerung 2, welche eine einbetonierte Hülse 20 umfasst, den Absperrpfosten 0. Dieser kann zur Absperrung unterschiedlicher Wege und Plätze eingesetzt werden, wobei eine ungewünschte Entfernung durch einen Verriegelungsmechanismus mit Schloss verhindert wird.

Das Standrohr 1 ist stabil und unbewegbar in einer Verriegelungsposition gelagert. Wenn aber eine Kraft F, die einen bestimmten Wert übersteigt auf das Standrohr 1 einwirkt, dann wird das Standrohr 1 vom Fussabschnitt 10, insbesondere von einer Ankerplatte 101 des Fussabschnittes 10 getrennt. Entsprechend wird auch das Standrohr 1 von der von der Bodenverankerung 2 getrennt, was üblicherweise nicht bei leichtem Kontakt mit Personen, sondern bei Kontakt mit Fahrzeugen stattfindet. Neben der Krafteinwirkung durch einen Unfall, kann beispielsweise im Falle eines Notfalles gewünscht sein, dass der Absperrpfosten schnell aus dem Weg geräumt und ein ungehinderter Zugang geschaffen werden kann. In derartigen Fällen kann ein Rettungswagen das Standrohr 1 durch eine gezielte Kollision von der Bodenverankerung 2 trennen. Durch Bildung einer Sollbruchstelle zwischen Standrohr 1 und Bodenverankerung 2 wird dies erreicht. Die technischen Voraussetzungen, welche die gewünschte Trennbarkeit gewährleisten und trotzdem eine einfache Instandsetzung ermöglichen, werden im Folgenden erläutert.

Der Fussabschnitt 10 des Standrohres 1 ist mit einer Hülsenaufnahmeplatte 201 als Deckel der Hülse 20 wirkverbindbar. Die Hülsenaufnahmeplatte 201 weist eine Zentrierdornaussparung 2011 und mindestens eine Riegelzapfenaussparung 2012 auf. In einer Mehrzahl von Ringsegmentausnehmungen 2013 und einer Mehrzahl von Rückhaltestreben 2014 kann ein Bajonettverschluss zur Verankerung des Fussabschnittes 10 und des daran befestigten Standrohres 1 in der Hülsenaufnahmeplatte 201 gebildet werden. Die Hülsenaufnahmeplatte 201 wird form- und/oder kraft- und/oder stoffschlüssig auf der Hülse 20 befestigt. Aus Stabilitätsgründen ist es vorteilhaft die Hülsenaufnahmeplatte 201 mit einem wulstigen und/oder hervorstehenden Rand auszustatten, sodass das Standrohr 1 stabil auf der Hülsenaufnahmeplatte 201 gelagert werden kann.

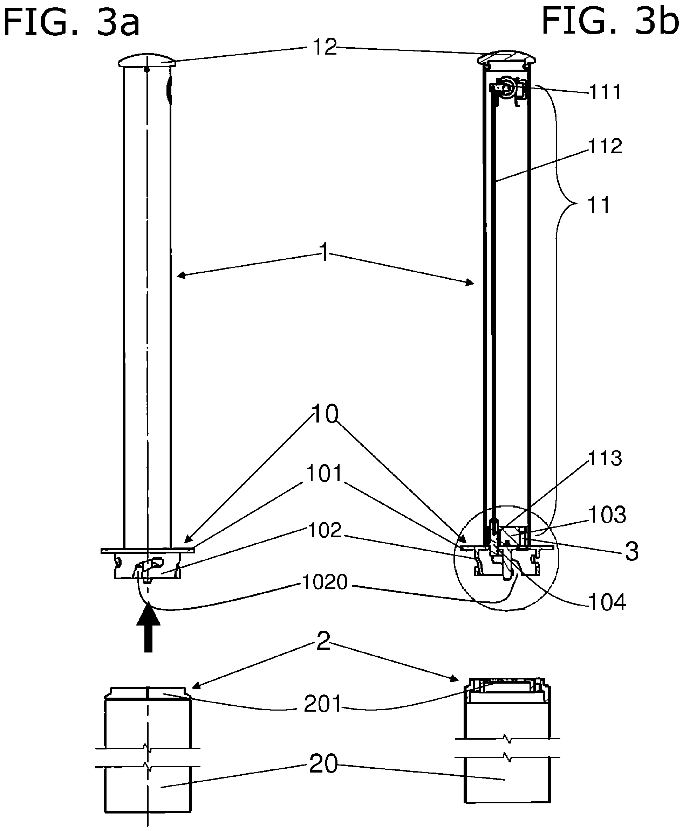

Wie in den Figuren 3a und 3b gezeigt, umfasst der Fussabschnitt 10 neben der Ankerplatte 101, einen Befestigungsrand 102, einen Zentrierdorn 104. Der Befestigungsrand 102 ist unterhalb der Ankerplatte 101 angeformt, wodurch der Fussabschnitt 10 mittels Befestigungsrand 102 mit der Ringsegmentausnehmung 2013 und den Rückhaltestreben 2014 den Bajonettverschluss bildend mit der Bodenverankerung 2 wirkverbindbar ist. In den Befestigungsrand 102 ist entsprechend die mindestens eine Bajonettausnehmung 1020 eingeformt, sodass in verriegelter Position die Rückhaltestreben 2014 in die Bajonettausnehmung 1020 eingreifen und ein Herausgleiten des Fussabschnittes 10 samt daran befestigten Standrohres 1 in vertikaler Richtung verunmöglichen. In der hier gezeigten Ausführungsform sind vier Bajonettausnehmung 1020 ausgespart. Der ebenfalls an die Ankerplatte 101 angeformte Zentrierdorn 104 dient der exakten vertikalen Positionierung des Standrohres 1 relativ zur Hülse 20, wobei der Befestigungsrand 102 in die Ringsegmentausnehmungen 2013 eingreift.

Auf der der Ankerplatte 101 abgewandten Seite des Standrohres 1 ist ein Deckel 12 angebracht, welcher das Standrohr 1 abschliesst. Im Standrohr 1 verlaufend ist ein Verriegelungsmechanismus 11 angeordnet. Der Verriegelungsmechanismus 11 umfasst ein Schloss 111, eine Verriegelungsstange 112 und einen Riegelzapfen 113. Durch Betätigung des Schlosses 111 mit dem passenden Schlüssel ist die Verriegelungsstange 112 linear betätigbar mittels welcher der Riegelzapfen 113 kontrolliert durch die Ankerplatte 101 führbar und in der mindestens einen Riegelzapfenaussparung 2012 in der Hülsenaufnahmeplatte 201 fixiert werden kann. Bei verriegelter Positionierung des Standrohres 1 bzw. des Fussabschnittes 10 in der Hülse 20, kann das Standrohr 1 nur durch Entriegelung des Riegelzapfens 113 aus der Hülsenaufnahmeplatte 201 entfernt werden und damit das Standrohr 1 von der Hülse 20.

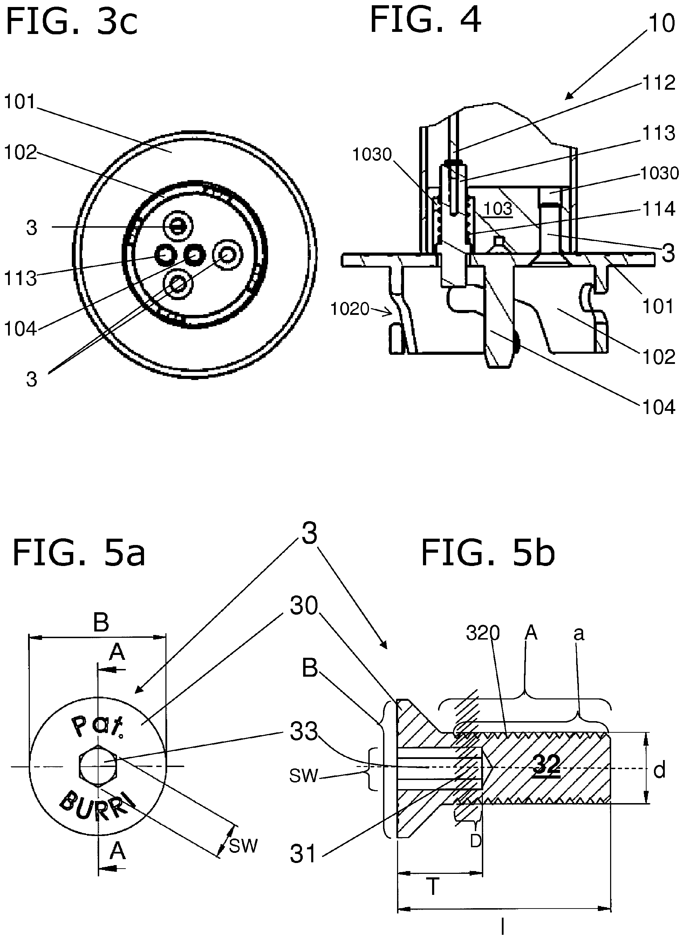

Der Fussabschnitt 10, genauer die Ankerplatte 101 samt Befestigungsrand 102 und Zentrierdorn 104 ist mittels einer Mehrzahl von Abscherschrauben 3 mit dem Standrohr 1 verbunden. Wie in Figur 3c erkennbar, sind hier drei Abscherschrauben 3 gewählt, welche die Ankerplatte 101 mit dem Standrohr 1 verbinden. Blickt man in die Richtung des Pfeils aus Figur 3a, so erhält man die Ansicht auf den Fussabschnitt 10 gemäss Figur 3c. Der Befestigungsrand 102 umgibt die Mehrzahl von Abscherschrauben 3, den Zentrierdorn 104 und den Riegelzapfen 113 ringförmig.

Hier ist ein Sockel 103 im Standrohr 1 vorgesehen, welcher, wie in Figur 4 gezeigt, entsprechende Ausnehmungen 1030 aufweist, in welche die Abscherschrauben 3 einschraubbar sind. Dadurch kann das Standrohr 1 mittels mindestens einer Abscherschraube 3 welche eine Sollbruchstelle bilden mit dem Fussabschnitt 10 unlösbar verbunden werden.

Das hier vorgestellte Beispiel weist drei Abscherschrauben 3 auf, welche in Ausnehmungen 1030 im Sockel 103 form- und/oder kraftschlüssig fixiert sind. Die Abscherschrauben 3 sorgen für eine bündige Fixierung des Standrohres 1 auf der Ankerplatte 101. In einer Ausnehmung 1030 ist der Riegelzapfen 113 mit einer Feder 114 vorgespannt gelagert, sodass der Riegelzapfen 113 bei nicht betätigter Verriegelungsstange 112 die Ankerplatte 101 querend vorgespannt ist.

Die Abscherschraube 3 weist einen Kopf 30 mit einer Kopfbreite B auf, wobei ein Mitnahmeprofil 33 eingeformt oder ausgespart ist. Der Kopf 30 ist hier als Senkkopf ausgestaltet, weist einen runden Querschnitt auf und ein Mitnahmeprofil 33 mit einer Schlüsselweite SW. Das Mitnahmeprofil 33 ist hier als Innen-Sechskant ausgeführt und quert den Kopf 30 vollständig und reicht bis in den an den Kopf 30 angrenzend angeformten Gewindeschaft 32, wie in Figur 5b gezeigt.

Der Gewindeschaft 32 weist auf einer Gewindelänge a ein Aussengewinde 320 auf. Der Gewindeschaft 32 hat dabei einen Schaftdurchmesser d. Es ergibt sich eine Abscherschraube 3 mit einer Gesamtlänge I, welche der Summe aus Länge des Kopfes und der Länge A des Gewindeschaftes 32 entspricht.

Die Tiefe T des Mitnahmeprofils 33 ist derart ausgeführt, dass das Mitnahmeprofil 33 soweit in den Gewindeschaft 32 hineinragt, dass die ersten Gewindesteigungen überstrichen sind. Als Gewindesteigung wird der Abstand zwischen benachbarten Gewindespitzen verstanden. Entsprechend kann ein Abstand D zwischen der ersten Gewindespitze des Aussengewindes 320 von der Seite des Kopfes 30 ausgehend bis zum Ende des Mitnahmeprofils 33 in Längsrichtung definiert werden.

Zwischen Kopf 30 und dem Gewindeschaft 32 bzw. im Bereich des Gewindeschaftes 32 bildet sich ein Sollbruchstellenbereich 31 aus, in welchem die Abscherschraube 3 bei entsprechender Belastung bricht. Da das Mitnahmeprofil 33 in diesen Sollbruchstellenbereich 31 hineinreicht, kann die abgescherte Abscherschraube 3 einfach aus dem Sockel 103 herausgeschraubt werden.

Versuche haben gezeigt, dass die Tiefe T kleiner als die Hälfte der Länge I der Abscherschraube 3 sein muss. Der Abstand D muss mindestens dem Abstand dreier Gewindesteigungen entsprechen oder grösser sein. Abscherschrauben 3 mit derartigem Aufbau brechen in dem gestrichelt markierten Sollbruchstellenbereich 31, was bei Verwendung in den oben beschriebenen Absperrpfosten 0 zu guten Ergebnissen führt.

In einer bevorzugten Ausführungsform wird eine Abscherschraube 3 mit einem M10 Aussengewinde 320 und einem Aussendurchmesser d von 10 Millimetern verwendet. Die Länge I beträgt 30 mm und die Tiefe T 12 mm. Das Mitnahmeprofil 33 ragt vom Kopf 30 über die ersten drei Gewindesteigungen in den Gewindeschaft 32 hinein. Die Schlüsselweite SW beträgt 5.1 mm.

Wirkt eine Kraft F in einem Abstand von der Bodenverankerung 2 auf das Standrohr 1, so wirkt ein Drehmoment grösser Null auf das Standrohr 1. Übersteigt die Kraft F bzw. das Drehmoment einen definierten Wert, dann werden die Abscherschrauben 3 abgeschert, wobei die Köpfe 30 von den Gewindeschäften 32 im Bereich der Sollbruchstelle 31 abgetrennt werden. Dabei wird die Verbindung zwischen Standrohr 1 und Fussabschnitt 10 bzw. der Ankerplatte 101 aufgehoben, sodass nach dem Herausrutschen des Riegelzapfens 113 aus der Ankerplatte 101, das Standrohr 1 von der Ankerplatte 101 und damit verbundener Hülse 20 getrennt ist. Diese Trennung kann teilweise passieren, wobei nicht alle Abscherschrauben 3 abscheren. Der Wert des Drehmomentes, bei dem die Abscherschrauben 3 abscheren liegt bei etwa 500 Nm bis 800 Nm, wobei die Krafteinwirkung in etwa auf Höhe einer Fahrzeugstossstange einwirkt.

Um den Absperrpfosten 0 wieder herzustellen, können die verbliebenen Gewindeschäfte 32 der abgescherten Abscherschrauben 3 einfach aus den Ausnehmungen 1030 bzw. den Gewinden im Sockel 103 entfernt werden. Es ist nicht notwendig den Gewindeschaft 32 mit einer Zange zu greifen. Mit einem entsprechenden Werkzeug kann in das eingeformte Mitnahmeprofil 33 im Gewindeschaft 32 eingegriffen werden und dieser entfernt werden.

Durch die Gestaltung der Sollbruchstellenbereiche 31 der Abscherschrauben 3 wird die Beschädigung am Absperrpfosten 0 auf die Abscherschrauben 3 beschränkt. Das umgefahrene Standrohr 1 kann wiederverwendet werden. Da die Abscherschraube 3 in Höhe zwischen Sockel 103 und Ankerplatte 101 abschert, werden weder die Ankerplatte 101 noch die Ausnehmungen 1030 beschädigt. Der Fussabschnitt 10, sowie die Bodenverankerung 2 bleiben intakt. Belagsarbeiten oder Fundamenterneuerungen entfallen, sodass ein neuer Absperrpfosten 0 in kürzester Zeit wieder installiert ist. Durch einen verbesserten Sollbruchstellenbereich 31 der Abscherschrauben 3 ist ein verbesserter Absperrpfosten 0 im Vergleich zu den, aus dem Stand der Technik bekannten Absperrpfosten geschaffen.

Die Gestaltung der Mitnahmeprofile 33 kann beispielsweise in Form eines Innen-Vielzahns oder eines Torx ausgeführt sein. Ausserdem bietet sich ein Mitnahmeprofil 33 in Form eines Innenmehrkants, beispielsweise ein Innen-Vierkant wie bei einer Robertson-Schraube oder ein Innen-Sechskant, welcher im deutschsprachigen Raum unter dem Begriff Inbus bekannt ist, an.

In der hier dargestellten Ausführungsform der Abscherschraube 3 wurde ein Kopf 30 in Form eines Senk-Kopfes dargestellt. Es ist aber ebenfalls möglich den Kopf 30 als Sechskant-, Zylinder-, Rund- oder Linsen-Kopf auszubilden. Wichtig ist hingegen, dass die Kopfbreite B des Kopfes 30 grösser ist als der Schaftdurchmesser d des Gewindeschaft 32, damit die Abscherschrauben 3 für die Fixierung des Standrohres 1 auf der Ankerplatte 101 sorgen können, wie in Fig. 4 dargestellt ist.

Die Abscherschraube 3 ist bevorzugt aus rostfreiem Edelstahl hergestellt, da die Abscherschrauben 3 für längere Zeit unversehrt in einem Absperrpfosten 0 lagern. Je nach Wahl der Schlüsselweite SW, der Länge I und des Abstandes D können auch andere Materialien verwendet werden, wobei die resultierenden Abscherschrauben 3 bei den geforderten Belastungen abscheren.

### Bezugszeichen liste

- 0: Absperrpfosten
- 1: Standrohr
10 Fussabschnitt
101 Ankerplatte
102 Befestigungsrand / Bajonettverschluss
1020 Bajonettausnehmung
103 Sockel
1030 Ausnehmungen
104 Zentrierdorn
11 Verriegelungsmechanismus
111 Schloss
112 Verriegelungsstange
113 Riegelzapfen
114 Feder
12 Deckel
- 2: Bodenverankerung
20 Hülse (in Boden eingelassen)
201 Hülsenaufnahmeplatte
2011 Zentrierdornaussparung
2012 Riegelzapfenaussparung
2013 Ringsegmentausnehmung (für Bajonett)
2014 Rückhaltestreben
- 3: Abscherschraube
30 Kopf (Senkkopf)
B Kopfbreite
31 Sollbruchstellenbereich
32 Gewindeschaft
320 Aussengewinde
d Schaftdurchmesser
A Länge Gewindeschaft
a Gewindelänge
33 Mitnahmeprofil
SW Schlüsselweite
T Tiefe des Mitnahmeprofils in Abscherschraube
- D: Abstand zwischen erster Gewindespitze zum Ende des Mitnahmeprofils
- I: Länge der Abscherschraube

## Patentansprüche

1. Abscherschraube (3) zur Befestigung eines Standrohres (1) an einer Ankerplatte (101), umfassend
einen Kopf (30) mit einer Kopfbreite (B) und mit einem Mitnahmeprofil (33) und
einen Gewindeschaft (32) mit einem Schaftdurchmesser (d) und mit einem Aussengewinde (320), wobei die Abscherschraube (3) eine Sollbruchstelle am Kopf (30) oder Gewindeschaft (32) aufweist und die Kopfbreite (B) grösser ist als der Schaftdurchmesser (d),
**dadurch gekennzeichnet, dass**
das Mitnahmeprofil (33)
den Kopf (30) in Längsrichtung vollständig querend bis zu einer Tiefe (T) in den Gewindeschaft (32) verlängert reichend ausgeführt ist, wobei das Ende des Mitnahmeprofils (33) bis zu dem Bereich des Gewindeschaftes (32) reicht, in dem die ersten Gewindesteigungen des Aussengewindes (320) liegen,
wobei sich ein Sollbruchstellenbereich (31) ausbildet, welcher von dem Mitnahmeprofil (33) in Längsrichtung durchsetzt wird.

2. Abscherschraube (3) nach Anspruch 1, wobei sich die Tiefe (T) des Mitnahmeprofils (33) bis mindestens zur dritten Gewindesteigung des Aussengewindes (320) vom Kopf (30) her gesehen erstreckt.

3. Abscherschraube (3) nach Anspruch 1, **wobei** die Tiefe (T) des Mitnahmeprofils (33) kleiner als die Hälfte der Länge (I) der Abscherschraube (3) ist.

4. Abscherschraube (3) nach Anspruch 1, **wobei** der Abstand (D) zwischen erster Gewindespitze des Gewindeschafts (32) vom Kopf (30) her gesehen und dem Ende des Mitnahmeprofils (33) in Längsrichtung vom Kopf (30) ausgehend grösser oder gleich der dreifachen Gewindesteigung ist.

5. Abscherschraube (3) gemäss Anspruch 1, **wobei** das in den Kopf (30) und teilweise in den Gewindeschaft (32) verlängert eingeformte Mitnahmeprofil (33) im Kopf (30) und im Gewindeschaft (32) die gleiche Querschnittsform aufweist.

6. Abscherschraube (3) gemäss einem der vorangehenden Ansprüche, **wobei** das Mitnahmeprofil (33) in Form eines Innen-Vielzahns oder eines Torx ausgeführt ist.

7. Abscherschraube (3) gemäss einem der vorangehenden Ansprüche, **wobei** das Mitnahmeprofil (33) in Form eines Innenmehrkants, bevorzugt in Form eines Innen-Vierkants oder eines Innen-Sechskants ausgestaltet ist.

8. Verwendung mindestens einer Abscherschraube (3) gemäss einem der vorhergehenden Ansprüche zur unlösbaren mittelbaren oder unmittelbaren Befestigung eines Standrohres (1) an einer Bodenverankerung (2) zur Bildung eines Absperrpfostens (0), **dadurch gekennzeichnet, dass** der Sollbruchstellenbereich (31) der mindestens einen Abscherschraube (3) eine Sollbruchstelle des Absperrpfostens (0) zwischen Standrohr (1) und Bodenverankerung (2) bildet.

9. Absperrpfosten (0), umfassend ein Standrohr (1), welches mit einer Bodenverankerung (2) gesichert lösbar verbindbar ist, wobei mindestens eine Abscherschraube (3) gemäss einem der Ansprüche 1 bis 7 in einem Fussabschnitt (10) des Absperrpfostens (0) angeordnet ist und eine Sollbruchstelle des Absperrpfostens (0) zwischen Standrohr (1) und Bodenverankerung (2) bildet.

10. Absperrpfosten (0) nach Anspruch 9, wobei die mindestens eine Abscherschraube (3) eine Ankerplatte (101) vollständig querend in einer Ausnehmung (1030) in einem Sockel (103) im Standrohr (1) eingeschraubt ist, sodass die Ankerplatte (101) mittels Abscherschraube (3) unlösbar mit dem Standrohr (1) verbunden ist.

## Claims

1. A shear screw (3) for fastening a standpipe (1) to an anchor plate (101), comprising
a head (30) having a head width (B) and having a driver profile (33), and
a threaded shank (32) having a shank diameter (d) and having an external thread (320), wherein the shear screw (3) has a predetermined breaking point at the head (30) or the threaded shank (32) and the head width (B) is greater than the shank diameter (d),
**characterized in that**
the driver profile (33) is designed so as to extend completely through the head (30) in the longitudinal direction reaching into the threaded shank (32) up to a depth (T), wherein the end of the driving profile (33) reaches up to the region of the threaded shank (32) in which the first thread pitches of the external thread (320) lie,
wherein a predetermined breaking point region (31) is formed through which the driver profile (33) passes in the longitudinal direction.

2. The shear screw (3) according to claim 1, wherein the depth (T) of the driving profile (33) extends to at least the third thread pitch of the external thread (320) as seen from the head (30).

3. The shear screw (3) according to claim 1, wherein the depth (T) of the driver profile (33) is less than half the length (I) of the shear screw (3).

4. The shear screw (3) according to claim 1, wherein the distance (D) between the first thread tip of the threaded shank (32) as seen from the head (30) and the end of the driver profile (33) in the longitudinal direction starting from the head (30) is greater than or equal to three times the thread pitch.

5. The shear screw (3) according to claim 1, wherein the driver profile (33) formed into the head (30) and partially extended into the threaded shank (32) has the same cross-sectional shape in the head (30) and in the threaded shank (32).

6. The shear screw (3) according to any one of the preceding claims, wherein the driver profile (33) is designed in the form of an internal spline or Torx.

7. The shear screw (3) according to any one of the preceding claims, wherein the driver profile (33) is designed in the form of an internal polygon, preferably in the form of an internal square or an internal hexagon.

8. The use of at least one shear screw (3) according to any one of the preceding claims for non-detachable direct or indirect fastening of a standpipe (1) to a ground anchorage (2) so as to form a barrier post (0), **characterized in that** the predetermined breaking point region (31) of the at least one shear screw (3) forms a predetermined breaking point of the barrier post (0) between the standpipe (1) and the ground anchorage (2).

9. A barrier post (0), comprising a standpipe (1) which can be detachably connected in a secured manner to a ground anchorage (2), wherein at least one shear screw (3) according to any one of claims 1 to 7 is arranged in a foot section (10) of the barrier post (0) and forms a predetermined breaking point of the barrier post (0) between the standpipe (1) and the ground anchorage (2).

10. The barrier post (0) according to claim 9, wherein the at least one shear screw (3) completely extends through the anchor plate (101) and is screwed into a recess (1030) in a base (103) in the standpipe (1) so that the anchor plate (101) is non-detachably connected to the standpipe (1) by means of the shear screw (3).

## Revendications

1. Vis de cisaillement (3) destinée à la fixation d'un tube fixe (1) sur une plaque d'ancrage (101) comprenant
une tête (30) avec une largeur de tête (B) et avec un profil d'entraînement (33), et
une tige filetée (32) avec un diamètre de tige (d) et avec un filetage extérieur (320), la vis de cisaillement (3) comportant un point de rupture théorique sur la tête (30) ou la tige filetée (32) et la largeur de tête (B) étant plus grande que le diamètre de tige (d),
**caractérisée en ce que**
le profil d'entraînement (33)
est exécuté suffisamment prolongé dans la tige filetée (32) traversant complètement la tête (30) dans le sens longitudinal jusqu'à une profondeur (T), l'extrémité du profil d'entraînement (33) allant jusqu'à la zone de la tige filetée (32) dans laquelle se trouvent les premiers pas de filetage du filetage extérieur (320),
une zone de point de rupture théorique (31) étant constituée (33), laquelle est traversée par le profil d'entraînement dans le sens longitudinal.

2. Vis de cisaillement (3) selon la revendication 1, la profondeur (T) du profil d'entraînement (33) s'étendant jusqu'à au moins le troisième pas de filetage du filetage extérieur (320), vu depuis la tête (30).

3. Vis de cisaillement (3) selon la revendication 1, la profondeur (T) du profil d'entraînement (33) étant plus petite que la moitié de la longueur (1) de la vis de cisaillement (3).

4. Vis de cisaillement (3) selon la revendication 1, la distance (D) entre le premier sommet de filetage de la tige filetée (32), vue de la tête (30), et l'extrémité du profil d'entraînement (33) dans le sens longitudinal en partant de la tête (30), étant plus grande ou égale à trois fois le pas du filetage.

5. Vis de cisaillement (3) selon la revendication 1, le profil d'entraînement (33) conformé dans la tête (30) et en partie prolongé dans la tige filetée (32) comporte la même forme de section dans la tête (30) et dans la tige filetée (32).

6. Vis de cisaillement (3) selon l'une quelconque des revendications précédentes, le profil d'entraînement (33) étant exécuté sous la forme d'une vis polygonale intérieure ou hexalobulaire interne (Torx).

7. Vis de cisaillement (3) selon l'une quelconque des revendications précédentes, le profil d'entraînement (33) étant constitué sous la forme d'un polygone intérieur, de préférence sous la forme d'un quatre pans intérieur ou d'un six pans intérieur.

8. Utilisation d'au moins une vis de cisaillement (3) selon l'une quelconque des revendications précédentes pour la fixation inamovible directe ou indirecte d'un tube fixe (1) sur un ancrage de sol (2) pour former un poteau de barrage (0), **caractérisée en ce que** la zone de point de rupture théorique (31) d'au moins une vis de cisaillement (3) forme un point de rupture théorique du poteau de barrage (0) entre le tube fixe (1) et l'ancrage de sol (2).

9. Poteau de barrage (0), comprenant un tube fixe (1), lequel peut être relié de façon sécurisée amovible à l'ancrage de sol (2), au moins une vis de cisaillement (3) selon l'une quelconque des revendications 1 à 7 étant disposée dans une section de pied (10) du poteau de barrage (0) et formant un point de rupture théorique du poteau de barrage (0) entre le tube fixe (1) et l'ancrage de sol (2).

10. Poteau de barrage (0) selon la revendication 9, au moins une vis de cisaillement (3) étant vissée dans un socle (103) dans le tube fixe (1) traversant complètement une plaque d'ancrage (101) dans un évidement (1030) de telle sorte que la plaque d'ancrage (101) est reliée au tube fixe (1) de façon inamovible au moyen de la vis de cisaillement (3).
